# EUROPÄISCHE PATENTSCHRIFT

(11) **EP 1 800 916 B1**
(45) Veröffentlichungstag und Bekanntmachung des Hinweises auf die Patenterteilung: **10.11.2010**
(21) Anmeldenummer: 06024681.6
(22) Anmeldetag: 29.11.2006
(51) Int. Cl.: B60G 17/0195, B60G 17/017, B60T 7/12, B60W 30/18, B60W 10/18, B60W 10/22

(54) **Verfahren zur Niveauänderung eines Anhängerfahrzeuges und Fahrwerksanordnung**
Method for adjusting height of trailer vehicle and chassis arrangement
Procédé de changement de niveau d'un véhicule à remorque et ensemble chassis

(30) Priorität: 22.12.2005 DE 102005061479
(43) Veröffentlichungstag der Anmeldung: 27.06.2007
(73) Patentinhaber: WABCO GmbH, 30453 Hannover (DE)
(72) Erfinder: Barlsen, Holger, 30851 Langenhagen (DE); Schoppe, Michael, 30163 Hannover (DE); Stender, Axel, 31787 Hameln (DE)
(74) Vertreter: Günther, Constantin

(56) Entgegenhaltungen:
- EP-A1- 0 393 655
- DE-A1- 10 143 888
- DE-A1- 19 622 677
- DE-A1- 19 648 174

## Beschreibung

Die Erfindung betrifft ein Verfahren zur Niveauänderung eines Anhängefahrzeuges und eine Fahrwerksanordnung.

Anhängefahrzeuge sind oftmals mit einer Niveauregulierung ausgestattet, die im Allgemeinen elektronisch einstellbare Luftfedern aufweist, wie beispielsweise aus der DE 196 48 174 A1 bekannt.

Die Niveauänderungen werden im Allgemeinen während des Stillstands des Anhängefahrzeugs, z.B. an Verladerampen durchgeführt. Hierbei treten oftmals Verspannungen in den Achsen des Anhängefahrzeuges auf, die die Niveauänderung behindern und zum Teil ganz verhindern. Um die Verspannungen zu lösen, werden die Bremsen zum Teil von den Benutzern zeitweise manuell freigegeben und anschließend wieder festgestellt. Durch ein derartiges zeitweises Lösen der Bremsen tritt - insbesondere an Gefällen bzw. Steigungen - jedoch die Gefahr eines Wegrollens des Anhängers bzw. der nur durch das Zugfahrzeug gehaltenen Kombination auf. Auch kommt es bei einem derartigen Lösen der Bremsen der Räder oftmals zu ruckartigen Spannungsentladungen in den Achsen.

Der Erfindung liegt die Aufgabe zugrunde, ein Verfahren zur Niveauänderung eines Anhängefahrzeuges und eine Fahrwerksanordnung zu schaffen, mit denen bei einer Änderung des Fahrzeugniveaus Fahrwerkspannungen ganz oder zumindest weitgehend behoben oder vermieden werden können.

Diese Aufgabe wird durch ein Verfahren nach Anspruch 1 sowie eine Fahrwerksanordnung nach Anspruch 8 gelöst. Die Unteransprüche beschreiben bevorzugte Weiterbildungen.

Erfindungsgemäß werden somit die Bremsen an den beiden Seiten des Anhängefahrzeuges abwechselnd gelöst und wieder festgestellt. Dem liegt die erfindungsgemäße Erkenntnis zugrunde, dass die Verspannungen im Fahrwerk aufgrund der Änderung des Radstandes bei den Drehbewegungen der Lenker, im Allgemeinen Längslenker, erfolgen. Da bei der Niveauänderung der Fahrzeugaufbau gegenüber den Rädern verstellt wird, schwenken die Längslenker um ihre aufbauseitige Anlenkung, so dass sich die Position der Radauflagefläche gegenüber dem Aufbau und somit auch der Radstand des Fahrzeuges ändert. Hierdurch treten Verspannungen zwischen den Achsen und somit auch Verspannungen in den Achsen des Anhängefahrzeugs auf, die erfindungsgemäß durch zeitweiliges Lösen und Feststellen der Radbremsen gelöst werden.

Erfindungsgemäß wird hierbei erkannt, dass es hinreichend ist, dass die Bremsen an den beiden Seiten - d.h. links und rechts - des Anhängefahrzeuges alternierend gelöst und festgestellt werden. Somit wird erfindungsgemäß ein Zeitraum eines gleichzeitigen Lösens sämtlicher Fahrzeugbremsen des Anhängefahrzeuges vermieden. Dem liegt die erfindungsgemäße Überlegung zugrunde, dass ein derartiges zeitweises Lösen jeweils einer Seite ausreicht, um eine Entspannung zwischen den Achsen zu erreichen, und dennoch immer ausreichend Bremskraft vorhanden ist, um ein Wegrollen des Anhängefahrzeugs zu verhindern. Erfindungsgemäß können somit die Verspannungen aus den Achsen genommen werden und das gewünschte Niveau angefahren werden.

Das erfindungsgemäße Verfahren und das erfindungsgemäße Fahrwerk können insbesondere bei einem Sattelauflieger verwirklicht werden, der z. B. ein bis drei Achsen und vorteilhafterweise Längslenker, im allgemeinen gezogene Längslenker, aufweist.

Das erfindungsgemäße Fahrwerk kann mit keinem oder nur sehr geringem apparativen Mehraufwand gegenüber herkömmlichen Systemen ausgebildet werden, da lediglich die hierfür vorgesehene Steuereinrichtung entsprechend zu programmieren ist.

Die Erfindung wird im Folgenden anhand der beiliegenden Zeichnungen an einer Ausführungsform erläutert. Es zeigen:
- Fig. 1: ein Anhängefahrzeug mit elektronischer Niveauregulierung in Seitenansicht;
- Fig. 2: eine vergrößerte Detailansicht
- Fig. 3: das Anhängefahrzeug aus Fig. 1 in Draufsicht.

Ein Trailer 1 weist ein Zugfahrzeug 2 und ein Anhängefahrzeug 3 auf. Das Anhängefahrzeug 3 ist als Sattelauflieger ausgebildet und weist einen Aufbau 4 und ein Fahrwerk 5 auf, das - lediglich beispielhaft - eine vordere Achse 6 mit einem (in Fahrtrichtung F) rechten Rad 6.1 und einem linken Rad 6.2, eine mittlere Achse 7 mit einem rechten Rad 7.1 und einem linken Rad 7.2 sowie eine hintere Achse 8 mit einem rechten Rad 8.1 und einem linken Rad 8.2 aufweist. Alternativ hierzu sind z. B. auch Ausbildungen mit lediglich einer Vorderachse 6 und einer Hinterachse 7 oder auch einer einzigen Achse 6 möglich. Die Räder sind jeweils während des Stillstandes des Anhängefahrzeugs 3 durch eine Bremse 9 gesichert.

Das Zugfahrzeug 2 weist entsprechend eine Vorderachse 10 mit einem rechten Rad 10.1 und linken Rad 10.2 und eine Hinterachse 11 mit einem rechten Rad 11.1 sowie einem linken Rad 11.2 auf. Es ergibt sich somit ein Radstand d des gesamten Trailers 1 als Abstand der Vorderachse 10 des Zugfahrzeuges 2 zur hinteren Achse 8 des Anhängefahrzeuges 3.

Die Räder der Achsen 6, 7, 8 des Anhängefahrzeuges 3 sind jeweils an einem Längslenker 12 befestigt, der am Aufbau 4 bzw. einem aufbauseitigen Bauteil angelenkt ist. Weiterhin ist an jedem der Räder 6.1, 6.2, 7.1, 7.2, 8.1 und 8.2 eine elektronische pneumatische Niveauregulierung 14 vorgesehen, z. B. eine zwischen dem Länglenker 12 und dem Aufbau 4 befestigte pneumatische Luftfeder 14 mit einstellbaren Luftvolumen.

Bei einer Niveauregulierung, d.h. einer Höhenänderung des Aufbaus 4 durch Veränderung des Luftvolumens in den Luftfedern 14, schwenkt der Längslenker 12 in seiner aufbauseitigen Anlenkung. Hierdurch ändert sich der Radstand d, da die Räder 6.1, 6.2, 7.1, 7.2, 8.1 und 8.2 in den Anbindungen der Längslenker 12 um die Fahrzeugquerachse geschwenkt werden.

Erfindungsgemäß werden während und/oder nach der Niveauregulierung die Bremsen 9 zeitweilig gelöst und anschließend wieder festgestellt. Erfindungsgemäß erfolgt hierbei ein alternierendes Lösen zwischen der in Fahrtrichtung rechten Seite, d.h. den Rädern 6.1, 7.1 und 8.1 sowie der in Fahrtrichtung F linken Seite, d.h. den Rädern 6.2, 7.2 und 8.2. Hierbei werden zunächst die Bremsen 9 der Räder einer Seite, z.B. der Räder 6.1, 7.1 und 8.1 der rechten Seite, gelöst und anschließend wieder festgestellt, und daraufhin die Bremsen 9 der Räder der anderen Seite, d.h. der linken Räder 6.2, 7.2 und 8.2, gelöst und anschließend wieder festgestellt.

Vorteilhafterweise erfolgt das alternierende Lösen und Feststellen sowohl während der Niveauregulierung, d.h. während der Änderung des Luftvolumens der Luftfedern 14, als auch nach Beendigung der Niveauregulierung.

Vorteilhafterweise werden sämtliche linken bzw. sämtliche rechten Räder gleichzeitig gelöst und festgestellt. Erfindungsgemäß ist es jedoch grundsätzlich möglich, dass die Räder einer Seite sukzessive nacheinander gelöst und festgestellt werden.

Das Lösen und Feststellen der Bremsen 9 erfolgt hierbei selbsttätig bei der Niveauregulierung, ohne dass der Fahrer bzw. der Bedienende dies ergänzend vorzunehmen hat.

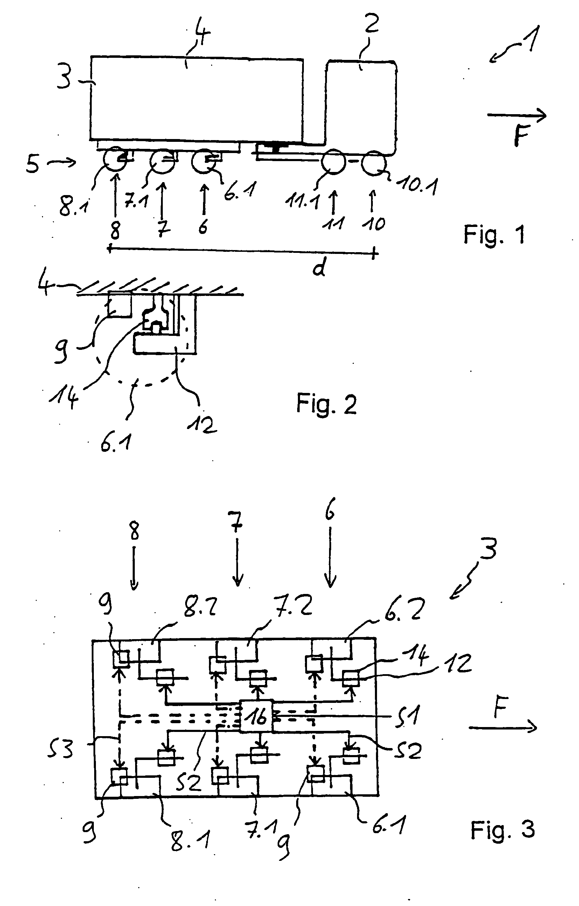

Hierzu wird von einer Steuereinrichtung 16 des Anhängefahrzeuges 3 ein vom Bedienenden eingegebenes Niveauänderungssignals S1 aufgenommen, woraufhin die Steuereinrichtung 16 zum einen - in Fig. 3 mit durchgehenden Linien gezeichnete - Steuersignale S2 an die Luftfedern 14 zur Änderung der Niveaueinstellung und zum anderen während und/oder nach der Niveauänderung - in Fig. 3 gestrichelt gezeichnete - Steuersignale S3 an die Bremsen 9 zum alternierenden Lösen und Feststellen der Bremsen 9 der linken und rechten Seite ausgibt.

## Patentansprüche

1. Verfahren zur Niveauänderung eines Anhängefahrzeuges (3), bei dem
eine Änderung der Niveaueinstellung eines Fahrzeugaufbaus (4) gegenüber den Rädern (6.1, 6.2, 7.1, 7.2, 8.1, 8.2) vorgenommen wird,
**dadurch gekennzeichnet, dass**
während und/oder nach der Änderung der Niveaueinstellung Bremsen (9) an den Rädern (6.1, 6.2, 7.1, 7.2, 8.1, 8.2) des Anhängefahrzeuges (3) selbsttätig gelöst werden,
wobei zuerst die Bremsen (9) der Räder (6.1, 7.1, 8.1) der einen Seite gelöst und festgestellt werden und nachfolgend die Bremsen (9) der Räder (6.2, 7.2, 8.2) der anderen Seite gelöst und festgestellt werden.

2. Verfahren nach Anspruch 1, **dadurch gekennzeichnet, dass** die Bremsen (9) der Räder (6.1, 7.1, 8.1) der rechten Seite und die Bremsen (9) der Räder (6.2, 7.2, 8.2) der linken Seite jeweils gleichzeitig gelöst und festgestellt werden.

3. Verfahren nach einem der vorherigen Ansprüche, **dadurch gekennzeichnet, dass** die Bremsen (9) während der Niveauänderung gelöst und festgestellt werden.

4. Verfahren nach einem der vorherigen Ansprüche, **dadurch gekennzeichnet, dass** die Bremsen (9) nach Beendigung der Niveauänderung gelöst und festgestellt werden.

5. Verfahren nach einem der vorherigen Ansprüche, **dadurch gekennzeichnet, dass** die Niveaueinstellung durch eine elektronisch eingestellte Luftfederung (14) erfolgt.

6. Verfahren nach Anspruch 5, **dadurch gekennzeichnet, dass** als Luftfederung elektronisch einstellbare Luftfedern (14) vorgesehen sind, die mit einem Ende aufbauseitig und mit ihrem anderen Ende lenkerseitig angebunden sind.

7. Verfahren nach einem der vorherigen Ansprüche, **dadurch gekennzeichnet, dass** die Räder (6.1, 7.1, 8.1, 6.2, 7.2, 8.2) zumindest einer Achse (6, 7, 8) mittels Längslenkern (12) aufgehängt sind.

8. Fahrwerksanordnung für ein Anhängefahrzeug, wobei die Fahrwerksanordnung aufweist:
mindestens eine Achse (6, 7, 8) mit linken und rechten Rädern (6.1, 6.2, 7.1, 7.2, 8.1, 8.2), die über Längslenker (12) angebunden sind,
Niveaueinstellmittel (14) zur Einstellung einer Höhe des Aufbaus (4) durch Schwenken der Längslenker (12), Bremsen (9) zum Feststellen und Freigeben der Räder (6.1, 6.2, 7.1, 7.2, 8.1, 8.2), und
einer Steuereinrichtung (16) zur Aufnahme eines Niveauänderungssignals (S1) und Ausgabe von Steuersignalen (S2) an die Niveaueinstellmittel (14) zur Änderung der Niveaueinstellung,
**dadurch gekennzeichnet, dass**
die Steuereinrichtung (16) bei Eingabe des Niveauänderungssignals (S1) Steuersignale (S3) an die Bremsen (9) zum Lösen und Feststellen der Bremsen (9) der Räder der linken Seite (6.2, 7.2, 8.2) und der Räder (6.1, 7.1, 8.1) der rechten Seite ausgibt,
wobei zuerst die Bremsen (9) der Räder der einen Seite gelöst und festgestellt werden und danach die Bremsen der Räder der anderen Seite gelöst und festgestellt werden.

## Claims

1. Method for adjusting the height of a vehicle trailer (3), in which the height setting of a vehicle body (4) in relation to the wheels (6.1, 6.2, 7.1, 7.2, 8.1, 8.2) is adjusted, **characterized in that** brakes (9) on the wheels (6.1, 6.2, 7.1, 7.2, 8.1, 8.2) of the trailer vehicle (3) are automatically released during and/or after adjustment of the height setting, the brakes (9) of the wheels (6.1, 7.1, 8.1) of the one side being released and locked first and subsequently the brakes (9) of the wheels (6.2, 7.2, 8.2) of the other side being released and locked.

2. Method according to Claim 1, **characterized in that** the brakes (9) of the wheels (6.1, 7.1, 8.1) of the right side and the brakes (9) of the wheels (6.2, 7.2, 8.2) of the left side are in each case released and locked simultaneously.

3. Method according to one of the preceding claims, **characterized in that** the brakes (9) are released and locked during the height adjustment.

4. Method according to one of the preceding claims, **characterized in that** the brakes (9) are released and locked after the end of the height adjustment.

5. Method according to one of the preceding claims, **characterized in that** the height is set by means of an electronically adjusted air suspension means (14).

6. Method according to Claim 5, **characterized in that** electronically adjustable pneumatic springs (14) which are connected at one end on the body side and at their other end on the control arm side are provided as the air suspension means.

7. Method according to one of the preceding claims, **characterized in that** the wheels (6.1, 7.1, 8.1, 6.2, 7.2, 8.2) of at least one axle (6, 7, 8) are suspended by means of longitudinal control arms (12).

8. Chassis arrangement for a trailer vehicle, wherein the chassis arrangement has:
at least one axle (6, 7, 8) with left and right wheels (6.1, 6.2, 7.1, 7.2, 8.1, 8.2) which are connected via longitudinal control arms (12),
height setting means (14) for setting a height of the body (4) by pivoting the longitudinal control arms (12),
brakes (9) for locking and releasing the wheels (6.1, 6.2, 7.1, 7.2, 8.1, 8.2), and
a control device (16) for receiving a height adjustment signal (S1) and issuing control signals (S2) to the height setting means (14) to adjust the height setting,
**characterized in that**, when the height adjustment signal (S1) is input, the control device (16) issues control signals (S3) to the brakes (9) for releasing and locking the brakes (9) of the wheels of the left side (6.2, 7.2, 8.2) and the wheels (6.1, 7.1, 8.1) of the right side, the brakes (9) of the wheels of the one side being released and locked first and then the brakes of the wheels of the other side being released and locked.

## Revendications

1. Procédé pour faire varier le niveau d'une remorque (3), dans lequel
une variation d'ajustement du niveau d'une carrosserie de véhicule (4) par rapport aux roues (6.1, 6.2, 7.1, 7.2, 8.1, 8.2) est effectuée,
**caractérisé en ce que**
pendant et/ou après la variation d'ajustement du niveau, les freins (9) au niveau des roues (6.1, 6.2, 7.1, 7.2, 8.1, 8.2) de la remorque (3) sont automatiquement relâchés,
les freins (9) des roues (6.1, 7.1, 8.1) d'un côté étant d'abord relâchés et serrés, puis les freins (9) des roues (6.2, 7.2, 8.2) de l'autre côté étant relâchés et serrés.

2. Procédé selon la revendication 1, **caractérisé en ce que** les freins (9) des roues (6.1, 7.1, 8.1) du côté droit et les freins (9) des roues (6.2, 7.2, 8.2) du côté gauche sont relâchés et serrés à chaque fois simultanément.

3. Procédé selon l'une quelconque des revendications précédentes, **caractérisé en ce que** les freins (9) sont relâchés et serrés pendant la variation de niveau.

4. Procédé selon l'une quelconque des revendications précédentes, **caractérisé en ce que** les freins (9) sont relâchés et serrés après la fin de la variation de niveau.

5. Procédé selon l'une quelconque des revendications précédentes, **caractérisé en ce que** l'ajustement de niveau s'effectue par une suspension pneumatique (14) ajustée électroniquement.

6. Procédé selon la revendication 5, **caractérisé en ce que** l'on prévoit comme suspension pneumatique des ressorts pneumatiques (14) ajustables électroniquement, qui sont reliés par une extrémité du côté de la carrosserie et par l'autre extrémité du côté des bras.

7. Procédé selon l'une quelconque des revendications précédentes, **caractérisé en ce que** les roues (6.1, 7.1, 8.1, 6.2, 7.2, 8.2) d'au moins un essieu (6, 7, 8) sont suspendues au moyen de bras longitudinaux (12).

8. Agencement de châssis pour une remorque, dans lequel l'agencement de châssis présenté :
au moins un essieu (6, 7, 8) avec des roues gauches et droites (6.1, 6.2, 7.1, 7.2, 8.1, 8.2),
qui sont reliées par le biais de bras longitudinaux (12),
des moyens d'ajustement de niveau (14) pour l'ajustement d'une hauteur de la carrosserie (4) par pivotement des bras longitudinaux (12),
des freins (9) pour fixer et relâcher les roues (6.1, 6.2, 7.1, 7.2, 8.1, 8.2), et
un dispositif de commande (16) pour recevoir un signal de variation de niveau (S1) et pour émettre des signaux de commande (S2) aux moyens d'ajustement de niveau (14) pour faire varier l'ajustement de niveau,
**caractérisé en ce que**
le dispositif de commande (16), lors de la saisie du signal de variation de niveau (S1), émet des signaux de commande (S3) aux freins (9) pour relâcher et fixer les freins (9) des roues du côté gauche (6.2, 7.2, 8.2) et des roues du côté droit (6.1, 7.1, 8.1),
les freins (9) des roues d'un côté étant d'abord relâchés et serrés, puis les freins des roues de l'autre côté étant ensuite relâchés et serrés.
